Europäisches Patentamt

**European Patent Office**

Office européen des brevets

(19)

(11) Veröffentlichungsnummer: **0 052 772**

**A2**

(12) # EUROPÄISCHE PATENTANMELDUNG

(21) Anmeldenummer: **81108784.0**

(22) Anmeldetag: **23.10.81**

(51) Int. Cl.³: **B 62 D 55/20**

(30) Priorität: **21.11.80 DE 3043874**

(43) Veröffentlichungstag der Anmeldung:
**02.06.82 Patentblatt 82/22**

(84) Benannte Vertragsstaaten:
**BE CH DE FR GB IT LI NL SE**

(71) Anmelder: **Rheinmetall GmbH**
**Ulmenstrasse 125**
**D-4000 Düsseldorf(DE)**

(72) Erfinder: **Fischer, Tilman, Dr.**
**Weberstrasse 9**
**D-4005 Meerbusch 1(DE)**

(74) Vertreter: **Behrens, Ralf Holger, Dipl.-Phys.**
**Ulmenstrasse 125**
**D-4000 Düsseldorf(DE)**

(54) **Gleiskette.**

(57) Bei einer Gleiskette umfassen die Kettenglieder quer zur Laufrichtung der Gleiskette angeordnete Rohrkörper (10,10'), in die Laufpolster (16) einsteckbar sind und die mit den in Laufrichtung benachbarten Kettengliedern durch Bolzen und Verbinder (13) verbunden sind.

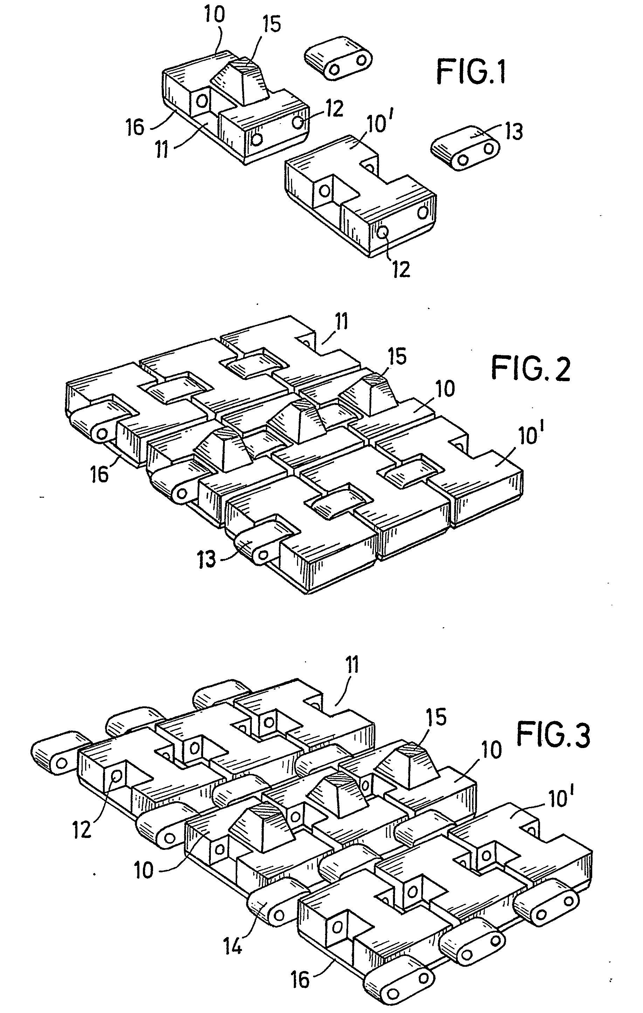

Um eine größere Flexibilität bezüglich der Verbreiterungsmöglichkeit einer solchen Gleiskette zu schaffen, ist mindestens ein Rohrkörper (10,10') pro Kettenglied vorgesehen, der an seinen benachbarten Kettengliedern zugewandten Endflächen eine mittig angeordnete Ausnehmung (11) aufweist, welche die Anbringung von Mittenverbindern (13) ermöglicht. Als Figur wird Fig. 2 benannt.

FIG. 2

EP 0 052 772 A2

Rheinmetall GmbH　　　　　　　Düsseldorf, den 18.11.1980
Bs/gro

Akte R 747

## Gleiskette

Die Erfindung betrifft eine Gleiskette nach dem Oberbegriff des Patentanspruchs 1.

Eine derartige Gleiskette ist aus der DE-OS 25 33 793 bekannt. Eine solche auch als Systemkette bezeichnete Gleiskette besteht aus einer relativ geringen Zahl und im wesentlichen identisch ausgebildeten Bestandteilen und läßt sich durch Aneinanderreihen dieser Bestandteile quer zur Laufrichtung verbreitern. Zur Verbreiterung der Kette werden unterschiedliche Bolzen in einer an die neue Kettenbreite angepaßten Länge benötigt. Die anderen Bestandteile der Gleiskette, wie Rohrkörper und Verbinder, können für unterschiedliche Kettenbreiten unverändert verwendet werden. Solche Gleisketten bieten den Vorteil, daß der Fertigungsaufwand und der Aufwand für Lager- und Ersatzteilhaltung ganz entscheidend dadurch herabgesetzt ist, daß zur Herstellung von Ketten unterschiedlicher Breiten nur noch prinzipiell gleiche Bauteile benötigt werden.

Bei der bekannten Systemgleiskette läßt sich eine Verbreiterung der Gleiskette nur dadurch erzielen, daß jedes Kettenglied mindestens einen weiteren Rohrkörper und einen weiteren Verbinder aufweist. Die Verbreiterung kann also nur stufenweise in einem bestimmten Rastermaß durchgeführt werden, welches durch die vorgegebene Breite der standardisierten Rohrkörper und Verbinder vorgegeben ist.

Der Erfindung liegt die Aufgabe zugrunde, eine Gleiskette der im Oberbegriff des Patentanspruchs angegebenen Art dahingehend zu verbessern, daß eine größere Flexibilität bezüglich der Verbreiterungsmöglichkeiten einer solchen Kette vorhanden ist.

Diese Aufgabe wird durch die im Patentanspruch 1 angegebene Erfindung gelöst. Dadurch, daß mindestens ein Rohrkörper jedes Kettengliedes eine mittig angeordnete Ausnehmung aufweist, welche die Anbringung von Mittenverbindern ermöglicht, ergibt sich eine größere Vielfalt von Verbreiterungsmöglichkeiten, obgleich weiterhin in großem Maße standardisierte identische Teile zum Aufbau der Gleiskette verwendet werden.

Die Erfindung wird nachfolgend unter Bezug auf die Zeichnung erläutert. Dabei zeigt:

Figur 1: standardisierte Rohrkörper gemäß der Erfindung und zugehörige Verbinder;

Figur 2: einen Teil einer Gleiskette in Aufsicht unter Verwendung der Rohrkörper gemäß Figur 1;

Figur 3: eine Aufsicht auf eine weitere Gleiskette unter Verwendung der in Figur 1 dargestellten Rohrkörper;

Figur 4: ein weiteres Ausführungsbeispiel der Erfindung, bei dem auch herkömmliche Rohrkörper vorhanden sind;

Figur 5: einen Verbinder in Seitenansicht.

Figur 1 zeigt Rohrkörper 10, 10' als standardisierte Bestandteile einer Systemgleiskette. Rohrkörper 10 verfügt im Unterschied zu Rohrkörper 10' über einen Führungszahn 15. Die Rohrkörper 10, 10' enthalten fluchtende Bohrungen 12 zur Aufnahme von in der Figur nicht dargestellten Kettenbolzen. Ein einzelnes Kettenglied einer solchen Systemgleiskette besteht aus mehreren Rohrkörpern 10, 10', welche auf Kettenbolzen nebeneinander angeordnet sind. Jedes Kettenglied ist mit dem nächsten über Verbinder 13, 14 verbunden, welche ebenfalls auf den Kettenbolzen befestigt sind. Erfindungsgemäß weisen die Rohrkörper 10 eine mittig angeordnete Ausnehmung 11 auf, welche, wie in den nachfolgenden Figuren erläutert wird, die Anbringung von Mittenverbindern 13 ermöglicht. Benachbarte Kettenglieder können also durch Außenverbinder 14 und/oder Mittenverbinder 13 miteinander verbunden werden.

Figur 2 zeigt in Aufsicht einen Teil einer Gleiskette. Ein Kettenglied umfaßt einen Rohrkörper 10 und zwei Rohrkörper 10', die auf einem nicht sichtbaren Kettenbolzen angeordnet sind. Benachbarte Kettenglieder der Gleiskette werden ausschließlich über Mittenverbinder 13 miteinander verbunden. Die Anbringung der Mittenverbinder 13 wird durch die erfindungsgemäße Ausbildung der Rohrkörper 10, 10' ermöglicht.

Figur 3 zeigt in Aufsicht einen Teil einer weiteren Gleiskette, welche in Bezug auf das in Figur 2 dargestellte Ausführungsbeispiel eine größere Breite aufweist. Diese größere Breite wird dadurch erzielt, daß anstelle von Mittenverbindern wie in Figur 2 Außenverbinder 14 vorgesehen sind. Es ist also ein Verbinder zusätzlich vorhanden, um dessen Breite die in Figur 3 dargestellte Kette in Bezug auf die in Figur 2 erläuterte Kette vergrößert ist.

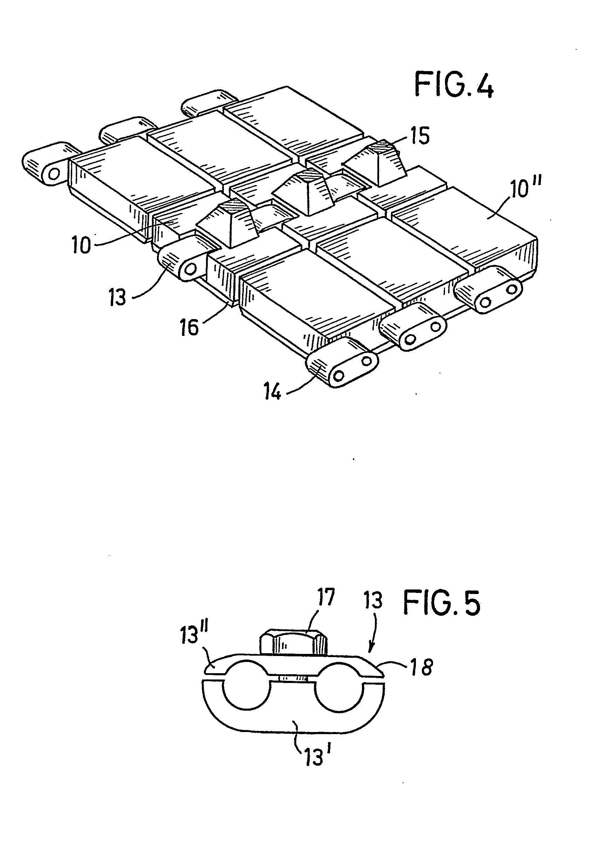

Figur 4 zeigt ein weiteres Ausführungsbeispiel der Erfindung, bei dem in den Kettengliedern der Gleiskette neben erfindungsgemäß ausgebildeten Rohrkörpern 10 auch herkömmliche Rohrkörper 10", die also keine mittig angeordnete Ausnehmung 11 aufweisen, verwendet sind.

Größere Kettenbreiten werden durch Hinzufügen weiterer Rohrkörper 10', 10" und zugehöriger Verbinder erzielt.

Im Gegensatz zu der aus der DE-OS 25 33 793 bekannten Gleiskette ermöglicht die Erfindung eine variantenreichere Abstufung hinsichtlich der Kettenbreite. Wie bei der bekannten Lösung kann selbstverständlich die Breite der Kette durch Hinzufügen beliebig vieler Rohrkörper 10 und der entsprechenden Anzahl von Verbindern 13, 14 vergrößert werden. Darüberhinaus ist jedoch auch eine Verbreiterung der Kette in der Weise möglich, daß, wie in Figur 3 dargestellt, lediglich eine Verbinderbreite hinzugefügt wird.

Die Erfindung bietet den immensen wirtschaftlichen Vorteil, daß bei geeigneter Bemessung der Rohrkörper 10, 10' und Verbinder 13 bzw. 14 nahezu alle bekannten Breitenabmessungen herkömmlicher Gleiskettenarten aus einigen wenigen standardisierten Bauelementen aufgebaut werden können.

Wie aus der DE-OS 26 57 906 bekannt ist, bieten Systemketten den Vorteil, daß ein Austausch der Laufpolster ohne Demontage der Gleiskette möglich ist. Bei der Montage der Laufpolster werden diese senkrecht zur Lauffläche der Kette mit ihren freien Enden in Ausnehmungen am Gleiskettenglied eingerastet.

Um das die gesamte Lauffläche der Rohrkörper 10, 10' bedeckende Laufpolster 16 nicht zu beeinträchtigen, werden die Verbinder 13 (Figur 5), die in den erfindungsgemäß vorgesehenen Ausnehmungen 11 angeordnet sind, zweckmäßig an ihrem dem Laufpolster 16 zugewandten Teilstück 13" abgeflacht. Die Abflachung wird so vorgenommen, daß die Fläche 18 des Verbinderteils 13" nicht in die Ebene des Laufpolsters 16 hineinragt.

0052772

Rheinmetall GmbH

Düsseldorf, den 18.11.1980
Bs/gro

Akte R 747

Bezugszeichenliste

10.  Rohrkörper
10'  Rohrkörper
10"  Rohrkörper
11   Ausnehmung
12   Bohrung
13   Verbinder
14   Verbinder
13'  Teil des Verbinders 13
13"  Teil des Verbinders 13
15   Führungszahn
16   Laufpolster
17   Schraube
18   Fläche von 13

Rheinmetall GmbH

Düsseldorf, den 18.11.1980
Bs/gro

**0052772**

Akte R 747

Patentansprüche:

1. Gleiskette, deren Kettenglieder quer zur Laufrichtung angeordnete Rohrkörper gleicher Breite aufweisen, in die Laufpolster einsteckbar sind und die mit den in Laufrichtung benachbarten Kettengliedern mittels Bolzen und Verbindern verbunden sind, d a d u r c h g e k e n n z e i c h n e t, daß mindestens ein Rohrkörper (10, 10') an seinen benachbarten Kettengliedern zugewandten Endflächen eine mittig angeordnete Ausnehmung (11) aufweist, welche die Anbringung von Mittenverbindern (13) ermöglicht.

2. Gleiskette nach Anspruch 1, d a d u r c h g e k e n n - z e i c h n e t, daß das dem Laufpolster (16) zugewandte Teilstück (13") des Verbinders (13) abgeflacht ist, daß die Fläche (18) nicht in die Ebene des Laufpolsters (16) hineinragt.

FIG.1

FIG.2

FIG.3

FIG.4

15

10'

10"

13

16

14

FIG.5

17    13

13"        18

13'